# EUROPEAN PATENT APPLICATION

(11) **EP 4 772 385 A1**
(43) Date of publication of application: **08.07.2026**
(21) Application number: 25222736.8
(22) Date of filing: 11.12.2025
(51) Int. Cl.: B60L 3/04, B60L 53/16, B60L 53/18, B60L 53/30, B60L 53/31, B60L 53/66, B60L 53/67, G08B 13/12

(54) **VANDALISM DETECTION AND PANIC MODE TRIGGER FOR EV CHARGERS IN EV CHARGING STATION NETWORK**

(30) Priority: 02.01.2025 US 202519008244
(71) Applicant: Eaton Intelligent Power Limited, Dublin 4 (IE)
(72) Inventor: MURAHARI, Saivaraprasad, Peachtree City, GA 30269 (US); CHEN, Gang, Peachtree City, GA 30269 (US)
(74) Representative: Jolliffe, Jack Louis

(57) **Abstract**

A vandalism detection and alert system (VDAS) is provided for an EV charging network monitored by a charge point operator (CPO). The VDAS is designed for use with a network whose EV charging stations use connector cables that include NTC cables to monitor over-temperature conditions. The VDAS includes an NTC monitoring logic module that continuously monitors each NTC cable in a given charging station. If there is a discontinuity in the communication path between an NTC cable and the NTC monitoring logic, the connector cable has likely been vandalized. The discontinuity causes an alarm to be issued in the specific charging station where the cable was vandalized and also causes an alert to be sent to the CPO. The CPO then issues a Panic Alarm command to all other charging stations associated with the site, causing all charging stations at the site to actuate their alarms.

## Description

### FIELD OF THE INVENTION

The disclosed concept relates generally to charging stations for electric vehicles (EVs), and more particularly, to vandalism detection and alert systems for EV charging stations.

### BACKGROUND OF THE INVENTION

With the development of electric vehicle (EV) technology, the number of EVs is growing rapidly, and EV charging stations, similar to gas stations, have become more widely available. An EV charging station, also called an electric recharging point, charging point, and EVSE (Electric Vehicle Supply Equipment), is an element in an infrastructure that supplies electric energy for the recharging of electric vehicles, plug-in hybrid electric-gasoline vehicles, or semi-static and mobile electrical units such as exhibition stands. EV charging stations generally consist of a charging base connected to a power supply (e.g. utility power), and a number of chargers/charging connectors connected to the charging base by electrical connector cables. Each charging connector is structured to connect to a charging interface on an EV in order to charge the battery of the EV with power supplied to the charging station.

Unfortunately, vandalism of EV charging stations and especially of connector cables at the charging stations is on the rise. When some portion of an EV charging station is vandalized, a full replacement of the EV charging station is often required, as it can be difficult to make isolated repairs to only the damaged components. The lack of deterrents in existing EV charging stations often leads to multiple EV chargers being vandalized at a given site.

There is thus room for improvement in EV charging stations and in vandalism detection and alert systems therefor.

### SUMMARY OF THE INVENTION

These needs, and others, are met by embodiments of a vandalism detection and alert system designed for use with an EV charging network monitored by a charge point operator (CPO). The vandalism detection and alert system is designed for use with a network whose EV charging stations use connector cables that include NTC (negative temperature coefficient) cables to monitor over-temperature conditions. The vandalism detection and alert system includes an NTC monitoring logic module that continuously monitors each NTC cable in a given charging station. If there is a discontinuity in the communication path between an NTC cable and the NTC monitoring logic, the connector cable has likely been vandalized. The discontinuity causes an alarm to be issued in the specific charging station where the cable was vandalized and also causes an alert to be sent to the CPO. The CPO then issues a Panic Alarm command to all other charging stations associated with the site, causing all charging stations at the site to actuate their alarms. The CPO can also alert the site host that the Panic Alarm has been issued. Alternatively, the vandalism detection and alert system can be used with an EV charging network in which, rather than being monitored by a CPO, all of the charging stations are connected on a local network either through a wired connection or wirelessly. When the vandalism detection and alert system is implemented in an EV charging network utilizing a local network scheme, a vandalized charger can broadcast a Panic Code to all other charging stations associated with the site, causing all charging stations at the site to actuate their alarms.

In one aspect of the disclosed concept, an EV charging network is configured to be monitored by a CPO and includes a plurality of charging stations. Each charging station comprises: a charging port and a vandalism detection and alert system. The charging port comprises: a charging base; a connector cable; an EV charging connector electrically connected to the charging base by the connector cable; and an NTC cable. The NTC cable runs across the connector cable and is configured to detect an over-temperature condition on the connector cable. The vandalism detection and alert system comprises: a control and communication module, and an alarm. The control and communication module is configured to communicate with the CPO and comprises an NTC monitoring logic module. Within each charging station, the control and communication module is configured to continuously monitor a communication path between the NTC cable and the NTC monitoring logic module. Within each charging station, the control and communication module is configured to actuate the alarm and to transmit an alarm alert to the CPO when the control and communication module detects a discontinuity in the communication path. The alarm alert is configured to cause the CPO to transmit a Panic Alarm command to all of the charging stations in the EV charging network. Within each charging station, the control and communication module is configured to actuate the alarm upon receipt of the Panic Alarm command.

In another aspect of the disclosed concept, a a method for detecting vandalism in an EV charging network and issuing a network-wide vandalism alarm in the EV charging network is provided. The method is for use in an EV charging network that is configured to be monitored by a CPO and includes a plurality of charging stations, with each charging station including a control and communication module and an EV charging connector connected to a charging base by a connector cable. A first step of the method is providing an NTC cable for the connector cable of each EV charging connector that is to be monitored in the EV charging network. A next step of the method is providing an NTC monitoring logic module in the control and communication module of each charging station that includes any NTC cables. A next set of steps of the method includes, for each NTC cable in a given one of the charging stations: continuously monitoring with the NTC monitoring logic module all electrical signals output by the NTC cable along a communication path between the NTC cable and the NTC monitoring logic module; determining with the control and communication module whether there is a discontinuity in a communication path between NTC cable and the NTC monitoring logic module; and when the control and communication module determines that there is a discontinuity in the communication path, actuating an alarm and transmitting an alarm command to the CPO with the control and communication module. A next step of the method is causing the CPO to issue a Panic Alarm command to all charging stations in the EV charging network when the CPO receives the alarm command. A next step in the method is, within each charging station in the EV charging network, upon receiving the Panic Alarm command, actuating the alarm with the control and communication module.

In a further aspect of the disclosed concept, an EV charging network includes a plurality of charging stations. Each charging station comprises: a charging port and a vandalism detection and alert system. The charging port comprises: a charging base; a connector cable; an EV charging connector electrically connected to the charging base by the connector cable; and an NTC cable. The NTC cable runs across the connector cable and is configured to detect an over-temperature condition on the connector cable. The vandalism detection and alert system comprises: a control and communication module that includes an NTC monitoring logic module, and an alarm. For each charging station, the control and communication module is configured to communicate with the control and communication module of every other charging station in the EV charging network. Within each charging station, the control and communication module is configured to continuously monitor a communication path between the NTC cable and the NTC monitoring logic module. For a given one of the charging stations, the control and communication module is configured to actuate the alarm and to transmit a Panic Code to the control and communication module of every other charging station in the EV charging network when the control and communication module within the given charging station detects a discontinuity in the communication path. Within each charging station that receives the Panic Code, the control and communication module is configured to actuate the alarm upon receipt of the Panic Code.

### BRIEF DESCRIPTION OF THE DRAWINGS

A full understanding of the invention can be gained from the following description of the preferred embodiments when read in conjunction with the accompanying drawings in which:
FIG. 1 is a schematic depiction of an EV charging network that includes a vandalism detection and alert system, in accordance with an example embodiment of the disclosed concept; and
FIG. 2 is a flowchart of a method of detecting vandalism in an EV charging network and issuing a network-wide vandalism alarm, in accordance with an example embodiment of the disclosed concept.

### DETAILED DESCRIPTION OF THE INVENTION

Directional phrases used herein, such as, for example, left, right, front, back, top, bottom and derivatives thereof, relate to the orientation of the elements shown in the drawings and are not limiting upon the claims unless expressly recited therein.

As employed herein, the statement that two or more parts are "connected" or "coupled" together shall mean that the parts are joined together either directly or joined through one or more intermediate parts, so long as a link occurs. As used herein, "directly coupled" means that two elements are directly in contact with each other. As used herein, "fixedly coupled" or "fixed" means that two components are coupled so as to move as one while maintaining a constant orientation relative to each other.

As employed herein, the term "controller" shall mean a programmable analog and/or digital device that can store, retrieve, and process data; a microprocessor; a microcontroller; a microcomputer; a central processing unit; or any suitable processing device or apparatus.

As employed herein, the term "number" shall mean one or an integer greater than one (i.e., a plurality).

As employed herein, when ordinal terms such as "first" and "second" are used to modify a noun, such use is simply intended to distinguish one item from another, and is not intended to require a sequential order unless specifically stated.

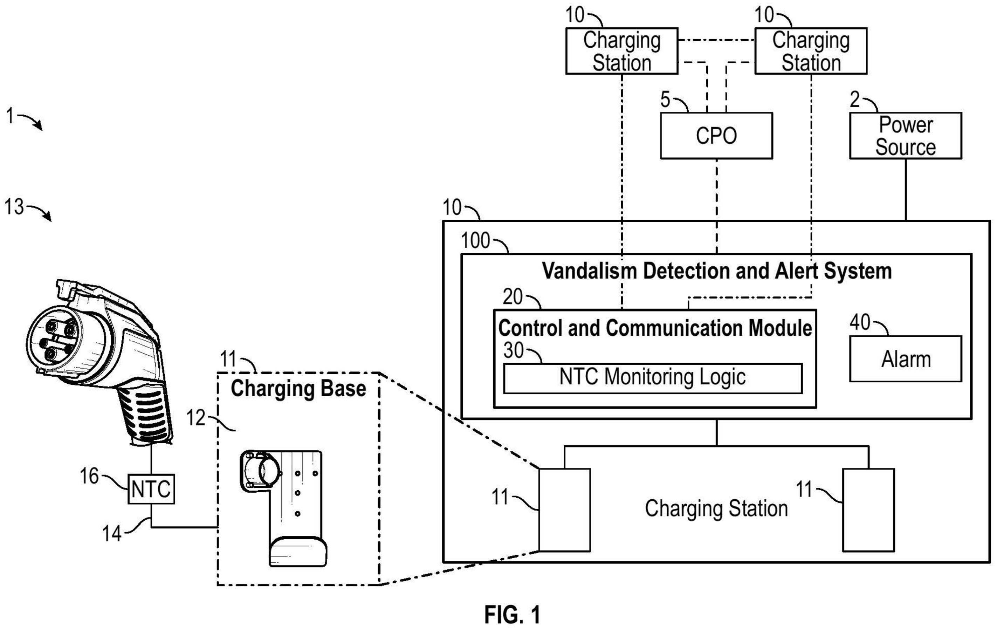

Going forward, the EV supply equipment industry will need to come up with more permanent solutions to fight vandalism, but in the interim, deterrence needs to be incorporated into existing equipment. The present disclosure provides an innovative deterrence solution in the form of a vandalism detection and alert system 100 that can be implemented in an existing EV charging network. FIG. 1 shows a simplified and schematically depicted EV charging network 1 in which the vandalism detection and alert system 100 disclosed in accordance with an exemplary embodiment of the disclosed concept has been implemented. The EV charging network 1 comprises a number of EV charging stations 10. Only one EV charging station 10 is shown in detail in FIG. 1, and it should be understood that the second and third EV charging stations 10 included in FIG. 1 are structurally similar to the one EV charging station 10 that is shown in detail. Like the EV charging network 1 depicted in FIG. 1, most commercial EV charging networks include multiple EV charging stations. The EV charging network 1 in FIG. 1 is depicted as including three EV charging stations 10 solely for illustrative purposes, and it is noted that the EV charging network 1 can comprise more than three charging stations 10 or fewer than three charging stations 10 without departing from the scope of the disclosed concept.

Each EV charging station 10 is connected to a power source 2, such as utility power. The EV charging station 10 comprises a number of charging ports 11. It is noted that most known EV charging stations include no more than two charging ports. While the EV charging station 10 depicted in FIG. 1 includes two charging ports 11, the EV charging station 10 could instead include only one charging port 11 without departing from the scope of the disclosed concept. One charging port 11 is shown enlarged and in detail so that the components of the charging port 11 can be viewed. It should be understood that all additional charging ports 11 included in the EV charging network 1 are structurally similar to the one EV charging port 11 that is shown in detail.

Each charging port 11 comprises a charging base 12 and an EV charging connector 13 electrically connected to the charging base 12 by a connector cable 14. The connector cable 14 connects the EV charging connector 13 to the power supplied to the charging station 10 by the power source 2. The EV charging connector 13 is structured to be plugged into the charging interface of an electric vehicle (not shown in the figures) in order to charge the electric vehicle.

Commercial EV charging networks are often monitored by a charge point operator (CPO), which is a cloud-based software entity. Many EV charging stations are configured to communicate with a CPO over a communication protocol called OCPP. A CPO communicates to a charging station information such as, for example and without limitation, charging price, charging availability, etc. Each charging network host (site host) with a CPO account has a dashboard with a clear view of all charging stations at the site. The EV charging station 10 in FIG. 1 comprises a control and communication module 20 and is monitored by a CPO 5. The control and communication module 20 is configured to communicate with the CPO 5 and with all of the charging ports 11 in the charging station 10. All of the charging stations 10 in the EV charging network 1 are monitored by the same CPO 5. Alternatively, rather than using CPO monitoring, an EV charging network can be configured so that all of the charging stations in the network are connected on a local network either through a wired connection or wirelessly. That is, for each charging station 10 in the EV charging network 1, the charging station's control and communication module 20 can be in direct communication with the control and communication module 20 of every other charging station 10 in the EV charging network 1. In FIG. 1, the charging stations 10 in the EV charging network 1 are also shown to alternatively have direct communication with one another (i.e., on a local network).

Each connector cable 14 measures anywhere from 10 feet to 25 feet in length and has an NTC (negative temperature coefficient) cable 16 running across it (the NTC cable 16 being depicted symbolically in FIG. 1) to detect over-temperature conditions in the EV charging connector 13. The control and communication module 20 for a given charging station 10 includes an NTC monitoring logic module 30 that monitors all of the NTC cables 16 within that charging station 10. It is noted that not all existing EV charger cables include an NTC cable/sensor, but the vandalism detection and alert system 100 disclosed herein (detailed further hereinafter) is specifically designed for use with charging ports 11 whose connector cables 14 do include an NTC cable/sensor.

The innovative nature of the disclosed vandalism detection and alert system 100 lies in its innovative use of the NTC cable 16 hardware, the control and communication module 20 (including the NTC monitoring logic module 30), and the CPO 5 software (that is, when the EV charging network 1 utilizes the CPO 5 instead of direct station-to-station communication over a local network). The vandalism detection and alert system 100 comprises the control and communication module 20 and further comprises an alarm 40. The NTC monitoring logic module 30 for a given EV charging station 10 continuously monitors electrical signals output by the NTC cables 16 of all EV charging connectors 13 in that EV charging station 10 to detect any acts of vandalism. If a given connector cable 14 in the EV charging station 10 is cut by a bad actor, the control and communication module 20 of that EV charging station 10 immediately detects it from the discontinuity between the NTC cable 16 of the cut cable 14 and the NTC monitoring logic module 30, said discontinuity resulting from the NTC cable 16 no longer transmitting a signal to the NTC monitoring logic module 30.

When the EV charging network 1 utilizes the CPO 5 (rather than using direct station-to-station communication over a local network) and the control and communication module 20 of a given charging station 10 detects a discontinuity from an associated EV charging cable 13, the control and communication module 20 of the given charging station 10 immediately does the following: (1) actuates the alarm 40, and (2) transmits an alarm alert to the CPO 5 using a unique OCPP command. In an exemplary embodiment of the disclosed concept, the alarm 40 issues both visual and audio signals that are intended to draw attention to the charging station 10 and motivate a vandal to immediately leave the charging station 10. Once the CPO 5 receives the unique OCPP alarm command, the CPO 5 will issue a "Panic Alarm" command to all of the EV charging stations 10 in the EV charging network 1 (in FIG. 1, all EV charging stations 10 in the EV charging network 1 share the same user account and the same location). When the control and communication module 20 of each non-vandalized EV charging station 10 in the charging network 1 receives the "Panic Alarm" command, the control and communication module 20 actuates its associated alarm 40. When the EV charging network 1 utilizes direct station-to-station communication over a local network (rather than using the CPO 5) and the control and communication module 20 of a given charging station 10 detects a discontinuity from an associated EV charging cable 13, the control and communication module 20 of the given charging station 10 immediately does the following: (1) actuates the alarm 40, and (2) transmits a Panic Code to all of the other EV charging stations 10 in the EV charging network 1. When the control and communication module 20 of each non-vandalized EV charging station 10 in the charging network 1 receives the Panic Code, the control and communication module 20 actuates its associated alarm 40.

When a first charging station 10 in the EV charging network 1 has been vandalized, actuating every alarm 40 in the entire EV network 1 makes a much stronger impact than only actuating the alarm 40 of the one vandalized EV charging station 10 does, and thus provides a much stronger deterrent to vandalization of additional EV charging stations 10 in the charging network 1 after the first charging station 10 has been vandalized. In addition, the CPO 5 can notify the site host of the vandalism detection, which enables the site host to take action in a variety of ways, for example and without limitation, send out text messages to personnel responsible for the site, call a security company or the police, etc.

It is noted that, while it is ideal for every charging station in an EV charging network to have the same structure as the charging stations 10 shown in FIG. 1 in order to implement the vandalism detection and alert system 100 to the fullest extent, it would be possible to implement a scaled-down version of the vandalism detection and alert system 100 if only some charging stations in an EV charging network include all of the features of the charging station 10 while other charging stations in the EV charging network do not. In one non-limiting example, if a first EV charging station in an EV charging network includes all of the features of the EV charging station 10 shown in FIG. 1 while a second EV charging station in the EV charging network has EV connectors that do not include NTC cables, then vandalism of the second EV charging station cannot be detected using the NTC monitoring logic module 30; however, the second EV charging station 10 can still include the alarm 40 and the communication and control module 20 so that vandalism of the first EV charging station would cause actuation of the alarm 40 in the second EV charging station. In this non-limiting example, even though vandalism of the second EV charging station cannot be detected using the NTC monitoring logic 30 and thus does not cause the CPO 5 to transmit the "Panic Alarm" command to the first EV charging station, there is at least an increased deterrent in those situations when the first EV charging station is vandalized prior to vandalization of the second EV charging station being attempted. In this situation, if there is a location in the EV charging network 1 that is considered to have a higher potential for vandalism than other locations in the EV charging network 1, then it is recommended that the first EV charging station having the NTC cable(s) 16 and NTC monitoring logic module 30 be installed in the location having the higher potential for vandalism.

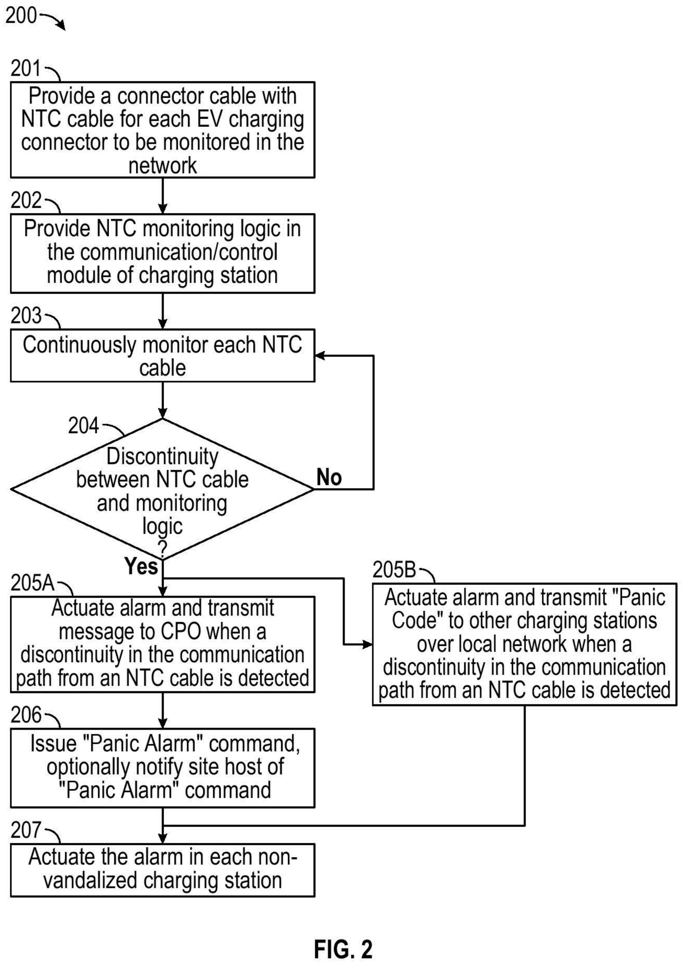

FIG. 2 is a flowchart of a method 200 of detecting vandalism in an EV charging network and issuing a network-wide vandalism alarm in accordance with an example embodiment of the disclosed concept. The method of FIG. 2 may be employed, for example, with the EV charging network 1 shown in FIG. 1 and is described in conjunction with the EV charging network 1 shown in FIG. 1. However, it will be appreciated that the method 200 may be employed in other EV charging networks as well without departing from the scope of the disclosed concept.

The method 200 begins at 201 where a connector cable 14 with an NTC cable 16 is provided for each EV charging connector 13 that is to be monitored in the EV charging network 1. At 202, an NTC monitoring logic module 30 is provided in the control and communication module 20 of at least one charging station 10. It is noted that steps 201 and 202 do not have to be performed in a specific order relative to one another and can be performed simultaneously. At 203, the NTC monitoring logic module 30 in the at least one charging station continuously monitors all electrical signals output by each NTC cable 16 along a communication path between the NTC cable 16 and the NTC monitoring logic module 30. At 204, in the at least one charging station 10, the control and communication module 20 checks to determine whether there is a discontinuity in the communication path between any of the NTC cables 16 and the NTC monitoring logic module 30. If there is no discontinuity, then the method returns to 203. If there is a discontinuity, the method proceeds to either step 205A or 205B. Specifically, if the EV charging network 1 implements CPO monitoring with the CPO 5, then the method proceeds to step 205A from step 204, and if the charging stations 10 in the EV charging network 1 are instead communicating directly with one another over a local network, then the method proceeds to step 205B from step 204.

At 205A, in the EV charging station 10 where the discontinuity is detected, the control and communication module 20 actuates the alarm 40 and transmits an alarm command to the CPO 5 using a unique OCPP command. After 205A, the method proceeds to 206, where the CPO 5 issues a "Panic Alarm" command to all other charging stations 10 in the EV charging network 1. At 206, the CPO 5 can optionally notify the site host that the "Panic Alarm" command has been issued. The method then proceeds to 207, where the control and communication module 20 of every non-vandalized EV charging station 10 in the EV charging network 1 actuates its associated alarm 40 upon receiving the "Panic Alarm" command.

At 205B, in the EV charging station 10 where the discontinuity is detected, the control and communication module 20 actuates the alarm 40 and transmits a "Panic Code" to the control and communication modules 20 of all other charging stations 10 in the EV charging network 1. The method then proceeds from 205B to 207, where the control and communication module 20 of every non-vandalized EV charging station 10 in the EV charging network 1 actuates its associated alarm 40 upon receiving the "Panic Code".

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. An EV charging network configured to be monitored by a CPO, the EV charging network comprising:
a plurality of charging stations, each charging station in the plurality of charging stations comprising:
a charging port, the charging port comprising:
a charging base;
a connector cable;
an EV charging connector electrically connected to the charging base by the connector cable; and
an NTC cable, the NTC cable running across the connector cable and being configured to detect an over-temperature condition on the connector cable; and
a vandalism detection and alert system, the vandalism detection and alert system comprising:
a control and communication module configured to communicate with the CPO, the control and communication module comprising a NTC monitoring logic module; and
an alarm,
wherein, within each charging station, the control and communication module is configured to continuously monitor a communication path between the NTC cable and the NTC monitoring logic module,
wherein, within each charging station, the control and communication module is configured to actuate the alarm and to transmit an alarm alert to the CPO when the control and communication module detects a discontinuity in the communication path,
wherein the alarm alert is configured to cause the CPO to transmit a Panic Alarm command to all of the charging stations in the EV charging network, and
wherein, within each charging station, the control and communication module is configured to actuate the alarm upon receipt of the Panic Alarm command.

2. The EV charging network of claim 1,
wherein the alarm alert to the CPO is formatted as a unique OCPP command.

3. The EV charging network of claim 1 or claim 2,
wherein, within each charging station, the alarm is configured to issue a visual signal when actuated.

4. The EV charging network of any preceding claim,
wherein, within each charging station, the alarm is configured to issue an audio signal when actuated.

5. The EV charging network of any preceding claim,
wherein the alarm alert to the CPO is configured to cause the CPO to notify a host of the EV charging network that the Panic Alarm command has been issued.

6. A method for detecting vandalism in an EV charging network and issuing a network-wide vandalism alarm in the EV charging network, the EV charging network being configured to be monitored by a CPO and including a plurality of charging stations, each charging station including a control and communication module and an EV charging connector connected to a charging base by a connector cable, the method comprising:
providing an NTC cable for the connector cable of each EV charging connector that is to be monitored in the EV charging network,
providing an NTC monitoring logic module in the control and communication module of each charging station that includes any NTC cables,
for each NTC cable in a given one of the charging stations:
continuously monitoring with the NTC monitoring logic module all electrical signals output by the NTC cable along a communication path between the NTC cable and the NTC monitoring logic module;
determining with the control and communication module whether there is a discontinuity in a communication path between NTC cable and the NTC monitoring logic module; and
when the control and communication module determines that there is a discontinuity in the communication path, actuating an alarm and transmitting an alarm command to the CPO with the control and communication module;
causing the CPO to issue a Panic Alarm command to all charging stations in the EV charging network when the CPO receives the alarm command; and
within each charging station in the EV charging network, upon receiving the Panic Alarm command, actuating the alarm with the control and communication module.

7. The method of claim 6,
wherein the alarm alert to the CPO is formatted as a unique OCPP command.

8. The method of claim 6 or claim 7,
wherein, within each charging station, the alarm is configured to issue a visual signal when actuated.

9. The method of any of claims 6 to 8,
wherein, within each charging station, the alarm is configured to issue an audio signal when actuated.

10. The method of any of claims 6 to 9, further comprising:
notifying a host of the EV charging network that the Panic Alarm command has been issued.

11. An EV charging network, the EV charging network comprising:
a plurality of charging stations, each charging station in the plurality of charging stations comprising:
a charging port, the charging port comprising:
a charging base;
a connector cable;
an EV charging connector electrically connected to the charging base by the connector cable; and
an NTC cable, the NTC cable running across the connector cable and being configured to detect an over-temperature condition on the connector cable; and
a vandalism detection and alert system, the vandalism detection and alert system comprising:
a control and communication module, the control and communication module comprising a NTC monitoring logic module; and
an alarm,
wherein, for each charging station, the control and communication module is configured to communicate with the control and communication module of every other charging station in the EV charging network,
wherein, within each charging station, the control and communication module is configured to continuously monitor a communication path between the NTC cable and the NTC monitoring logic module,
wherein, for a given one of the charging stations, the control and communication module is configured to actuate the alarm and to transmit a Panic Code to the control and communication module of every other charging station in the EV charging network when the control and communication module within the given charging station detects a discontinuity in the communication path, and
wherein, within each charging station that receives the Panic Code, the control and communication module is configured to actuate the alarm upon receipt of the Panic Code.

12. The EV charging network of claim 11,
wherein, within each charging station, the alarm is configured to issue a visual signal when actuated.

13. The EV charging network of claim 11 or claim 12,
wherein, within each charging station, the alarm is configured to issue an audio signal when actuated.
